# EUROPEAN PATENT APPLICATION

(11) **EP 1 736 404 A1**
(43) Date of publication of application: **27.12.2006**
(21) Application number: 05013680.3
(22) Date of filing: 24.06.2005
(51) Int. Cl.: B62M 25/04, B62K 23/06, B62L 3/02

(54) **Integrated control device for bicycle derailleur and brake**

(71) Applicant: CAMPAGNOLO S.R.L., I-36100 Vicenza (IT)
(72) Inventor: Dal Pra' Giuseppe, 36010 Zané (Vicenza) (IT)
(74) Representative: Riccardi, Elisa

(57) **Abstract**

An integrated control device (1) for a bicycle with curved handlebars (M) particularly ergonomic and which easily permits simultaneous braking and gear shifting operations, in particular towards lower gear ratios, is described. In the integrated control device (1), the gearshift control levers (10, 13) are provided with actuating portions (12, 15) which the cyclist's fingers can reach one from one side of the support (2) and the other from the other side of the support (2), and are placed in positions out of the reach of the brake lever (8).

## Description

The present invention relates to a control device used for driving a bicycle derailleur, and more particularly to a so called integrated control device, for driving a derailleur and a brake of a bicycle with a curved handlebars, such as a racing bicycle.

In the present description and in the appended claims, spatial terms, in particular the terms front, rear, side, top, bottom, vertical and horizontal, are used with reference to the assembled condition of the integrated control device, and with reference to the handlebars in a neutral position, the terms inner and outer indicate respectively towards the centre of the handlebars and the opposite side to the center of the handlebars.

A bicycle is normally provided with a rear derailleur associated to the sprocket set, which consists of a set of coaxial toothed wheels (sprockets), of different diameters and teeth numbers, integral with the hub of the rear wheel.

A bicycle is typically provided also with a front derailleur associated with the crankset, which consists of a set of toothed wheels (toothed crowns) of different diameters and teeth numbers, associated with a bottom bracket axle driven into rotation by a pair of pedals.

In both cases, the derailleur engages a transmission chain extended as a closed ring between the sprocket set and the crankset, moving it to toothed wheels of a different diameter and number of teeth, so as to obtain different gear ratios.

In particular, it is called downward gearshift when the chain shifts from a larger diameter toothed wheel to a smaller diameter toothed wheel, and upward gearshift when the chain shifts from a smaller diameter wheel to a larger diameter wheel. It is to be noted in this regard that in a front gearshift group, the downward gearshift corresponds to the passage to a lower gear ratio and the upward gearshift corresponds to the passage to a higher gear ratio, vice versa in a rear gearshift group, the downward gearshift corresponds to the passage to a higher gear ratio and the upward gearshift corresponds to the passage to a lower gear ratio.

The movement in the two directions of a derailleur is obtained through a control device assembled in such a way that it is easily handled by the cyclist, so normally on the handlebars, near the handgrips thereof where there is also the brake lever to control the brake of the front or rear wheel. Control devices which permit the driving both of a derailleur in the two directions and of a brake are normally called integrated controllers.

Customarily, nearby the left handgrip of the handlebars there are the control device of the front derailleur and the brake lever of the front wheel, and vice versa nearby the right handgrip there are the control device of the rear derailleur and the brake lever of the rear wheel.

More particularly, in a mechanical gearshift, each derailleur is moved between the toothed wheels, in a first direction by a traction action exerted by a normally sheathed inextensible cable (normally called Bowden cable), in a second opposed direction by releasing the traction action of the cable and/or by the elastic return action of a spring provided in the same derailleur.

Normally, the direction in which the movement is caused by the release of the traction action of the cable and/or by the return spring is that of a downward gearshift; vice versa, the traction action of the control cable occurs in the direction of an upward gearshift, in which the chain moves from a smaller diameter wheel to a larger diameter wheel.

In the control device, the control cable is traction or release actuated by winding and unwinding on a rotor element, commonly called cable-winding bush, which rotation is controlled by the cyclist with a pair of proper control levers.

In an electric or electronic gearshift, each derailleur is moved between the toothed wheels through a reversible motor, for example associated with a small actuating piston of an articulated parallelogram, and the control device comprises a pair of electric switches for controlling the movement of the motor in both directions. The two electric switches are typically actuated by a pair of levers of the control device.

A first integrated control device for a mechanical gearshift of a bicycle with curved handlebars is described in EP 504 118 A1 in the name of the same Applicant, wherein two different ratchet levers control the rotation, in the two directions, of the cable-winding bush.

Such a control device has a support body for fixing to the handlebars of the bicycle, externally of the curved portion of the handgrips of the handlebars (i.e. in front of the handlebars). The support body houses a cable-winding bush for the actuating cable of a derailleur. On the support body a brake lever for the traction of the brake cable, an upward gearshift lever gearshift arranged at the rear of the brake lever, adjacent and along the latter, for the upward gearshift operation and a downward gearshift lever, protruding from the inner side of the support body, for the downward gearshift operation are articulated.

The brake lever is then rotatable about a first axis, substantially perpendicular to the direction of advancing of the bicycle, to control the traction of a brake cable when the lever is pulled by the cyclist towards the handlebars. The cable-winding bush is arranged with its axis substantially perpendicular to the rotation axis of the brake lever.

The upward gearshift lever is articulated on a second axis, substantially parallel to the rotation axis of the cable-winding bush and of the advancing axis of the bicycle and thus substantially perpendicular to the rotation axis of the brake lever. The actuation of the upward gearshift lever about the second axis permits, through proper ratchets, the rotation of the cable-winding bush in a first direction to wind the cable and to obtain the upward gearshift.

The downward gearshift lever is articulated on a third axis substantially parallel to the rotation axis of the cable-winding bush. The actuation of the downward gearshift lever about the third axis permits, through proper ratchets, the rotation of the cable-winding bush in a second direction, opposed the first direction of rotation of the lever of the upward gearshift lever, to unwind the cable and obtain the downward gearshift.

The upward gearshift lever is also articulated on a fourth axis, substantially parallel to the first axis, which permits the upward gearshift lever to follow the movement of the brake lever during the braking.

Such a control device presents a first drawback consisting in that during the braking both the brake lever and the upward gearshift lever are pulled and it is very uncomfortable if not impossible to carry out an upward gearshift by driving the upward gearshift lever into rotation.

Another drawback resides in the constructive complexity of such a control device, in particular in the double articulation of the upward gearshift lever.

The technical problem at the basis of the present invention is to create an integrated control device for a bicycle with curved handlebars which is particularly ergonomic and which easily allows simultaneous actions of braking and gear shifting, in particular towards lower gear ratios. The possibility of upward gear shifting with the rear derailleur, or downward gear shifting with the front derailleur, while braking is particularly advantageous because it permits maintaining the rhythm of pedaling during deceleration and it also permits the setting of the transmission to a low gear ratio, suitable for the next acceleration or possibly restarting from a still position.

Within the above problem, it is an object of the present invention to create a constructively simple control device.

Such a problem is solved, according to the invention, by the fact that the gearshift control levers are provided with actuating portions which the cyclist's fingers can reach one on one side of the support and the other on the other side of the support, and positioned out of the reach of the brake lever.

More in particular, the invention refers to an integrated control device for driving a derailleur and a brake of a bicycle with curved handlebars, comprising a support body having a rear side for fixing in front of a curved handgrip portion of the handlebars, a front side bearing a brake lever pivoted about a first axis, an inner side surface, an outer side surface and a top transverse surface, and a first and a second gearshift levers pivoted about a second and a third axis, said first and second gearshift levers having a respective actuating portion, wherein the actuating portions can be reached by the cyclist's fingers from opposite sides of the support, characterized in that said actuating portions are both placed in positions out of the reach of the brake lever.

Preferably the second and the third axis are substantially parallel to each other and substantially perpendicular to said first axis.

In the present description and in the appended claims, under the term "reach to the brake lever" it is meant to indicate the space swept by the brake lever between its resting state and its operating state.

In such a way, the cyclist is free of actuating one of the gearshift levers or the brake lever, without totally leaving the grip on the support body or on the handlebars. Moreover, the cyclist is able to simultaneously actuate the brake lever and one of the two gearshift levers, in particular the lever for shifting towards lower gear ratios (the upward gear shifting lever in the case of the rear derailleur and respectively the downward gear shifting lever in the case of the front derailleur), because the actuation of the brake lever does not drag either of the gearshift levers, leaving it in the best position to be reached by the cyclist's fingers.

Typically, the first gearshift lever is intended to be actuated with the cyclist's thumb and to this end it protrudes from the inner side surface of the support body, substantially perpendicular to the brake lever, the respective actuating portion being substantially horizontal.

Typically, in the case of a mechanical gearshift, the first gearshift lever then controls an upward gearshift, because a stronger actuating force on the lever is necessary.

Moreover, typically, the second gearshift lever is intended to be actuated with one or more fingers other than the thumb, typically the middle finger or the ring finger, and to this end it protrudes substantially vertically below the support body.

Typically, in the case of a mechanical gearshift, the second gearshift lever then controls a downward gearshift, because a lower actuating force on the lever is necessary.

In first embodiments, at least a gearshift lever is pivoted in proximity, preferably in close proximity, of the rear side of the support body.

Preferably in such embodiments, both gearshift levers are pivoted in proximity, preferably in close proximity, of the rear side of the support body.

In such a way, the support body is easily hand-gripped with the palm on its top transverse surface and all five fingers that can close under the support body, in front of the gearshift levers. The cyclist is free of actuating one of the gearshift levers or the brake lever, without totally leaving the grip on the support body. The cyclist is also able to simultaneously actuate the brake lever and one of the two gearshift levers, typically that for shifting towards lower gear ratios.

In second embodiments, one of the gearshift levers is pivoted in proximity, preferably in close proximity, of the rear side of the support body and the other of the gearshift levers is pivoted in proximity, preferably in close proximity, of the brake lever.

In such a way, the support body is easily hand-gripped with the palm on its top transverse surface and all five fingers that can close under the support body, between the two gearshift levers. Also in this case, the cyclist is free of actuating one of the gearshift levers or the brake lever, without totally leaving the grip on the support body, and is able to simultaneously actuate the brake lever and one of the two gearshift levers.

In the case of both the above configurations, the second gearshift lever can protrude substantially vertically below the support body, in offset position towards its outer side face.

In a preferred variant, because it allows the cyclist to freely engage also the bicycle handlebars at the respective curved portion, without interfering with the second gearshift lever, the second gearshift lever protrudes below the support body, in an offset position towards its inner side face.

To allow in this case to bring the second gearshift lever in a suitable position for actuation with the fingers, advantageously without modifying the mechanics of the gearshift control device, the second gearshift lever can have two bends, the intermediate portion between the bends being extended adjacent below the support body.

When the integrated control of the invention is intended for use in a mechanical gearshift, typically the first gearshift lever and the second gearshift lever control the rotation in respective opposite directions of a cable-winding bush for a traction cable of a gearshift group, the cable-winding bush being housed in a cavity of the support body.

In a first type of control mechanism, one of the gearshift levers actively controls the rotation of the cable-winding bush in a direction winding the traction cable, while the other of the gearshift levers leaves the cable-winding bush free of rotating in the direction unwinding the traction cable, under the traction of the traction cable itself.

In a second type of control mechanism, each of the gearshift levers actively controls the rotation of the cable-winding bush in a respective direction.

When the integrated control of the invention is intended for use in an electric or electronic gearshift, on the other hand, each of the first gearshift lever and the second gearshift lever controls the pushing of a respective electric switch for driving an electric or electronic gearshift mechanism.

Further features and advantages of the present invention will better result from the following detailed description of some preferred embodiments, made with reference to the annexed drawings, merely by way of a not limiting example. In the drawings:
- FIG. 1 shows an isometric view of a first embodiment of a right integrated control device according to the invention, assembled on curved handlebars of a bicycle;
- FIGS. 2 and 3 show two front views of the control of FIG. 1 handled by the cyclist in two different operative conditions;
- FIG. 4 shows a side view of the control of FIG. 1;
- FIG. 5 shows a cross sectional view along the transverse plane V-V of the control of FIG. 1;
- FIG. 6 shows a cross sectional view along the transverse plane VI-VI of the control of FIG. 1;
- FIG. 7 shows a cross sectional view along the transverse plane V-V of a first embodiment of the inner mechanism of the control device of the invention;
- FIG. 8 shows a cross sectional view along the transverse plane VI-VI of the first embodiment of the inner mechanism of the control device of the invention;
- FIG. 9 shows a cross sectional view along the transverse plane IX-IX of the first embodiment of the inner mechanism of the control device of the invention;
- FIG. 10 shows an isometric view of a second embodiment of a right integrated control device according to the invention, assembled on curved handlebars of a bicycle;
- FIGS. 11 and 12 show two front views of the control of FIG. 10 handled by the cyclist in two different operative conditions;
- FIG. 13 shows a side view of the control of FIG. 10;
- FIG. 14 shows an isometric view of a third embodiment of a right integrated control device according to the invention, assembled on curved handlebars of a bicycle;
- FIG. 15 shows a front view of the control of FIG. 14 handled by the cyclist, with the brake lever partially removed;
- FIG. 16 shows a cross sectional view along the transverse plane XVI-XVI of the control of FIG. 14; and
- FIG. 17 shows a partially sectioned isometric view of a fourth embodiment of a right integrated control device according to the invention, assembled on curved handlebars of a bicycle.

The description of the integrated control device according to the invention is made below with reference to a right control device, i.e. associated with the right curved end of the handlebars, but it is manifest that the inventive concept would be applied to the left control device assembled on the left curved end of the handlebars, the integrated control device being substantially the mirror image about a vertical plane in assembled state.

The right control device 1 of the invention comprises a support body 2 to be fixed, at its rear side 3, in front of a curved handgrip portion of handlebars M through known connection means (not illustrated), for instance through a clip, and protruding in front of the handlebars M to be hand-gripped by the cyclist. The support body 2 is defined by an outer side surface 4 and an inner side surface 5 substantially parallel to each other, joined by a top transverse surface 6 and typically by a bottom transverse surface 7, that could however be absent submitting the function of resting for the fingers and protection from dirt to the external sheath typically provided on control devices.

In the case of a mechanical gearshift, the outer and inner side surfaces 4 and 5 and the bottom and top transverse surfaces 6 and 7 define an inner cavity where a control mechanism of the rear derailleur is placed.

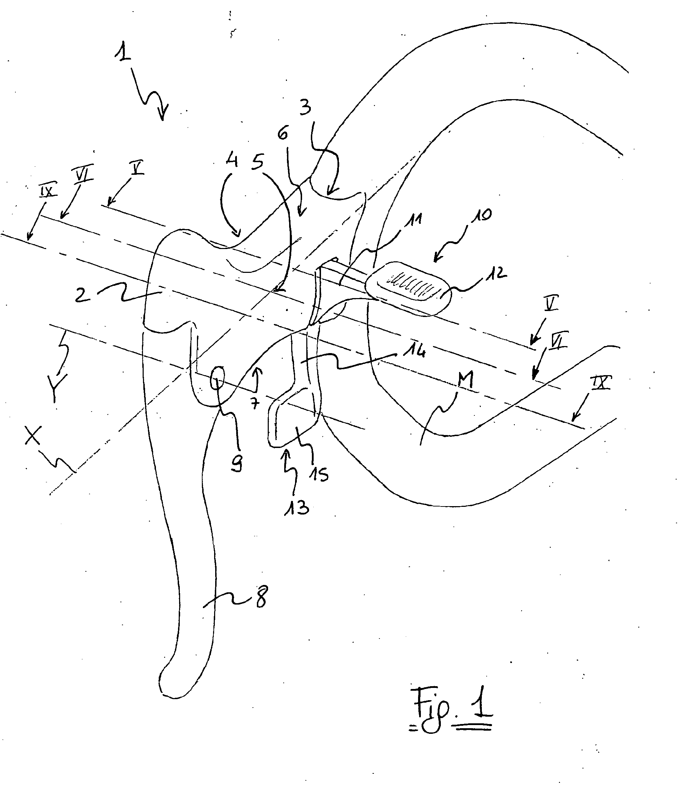

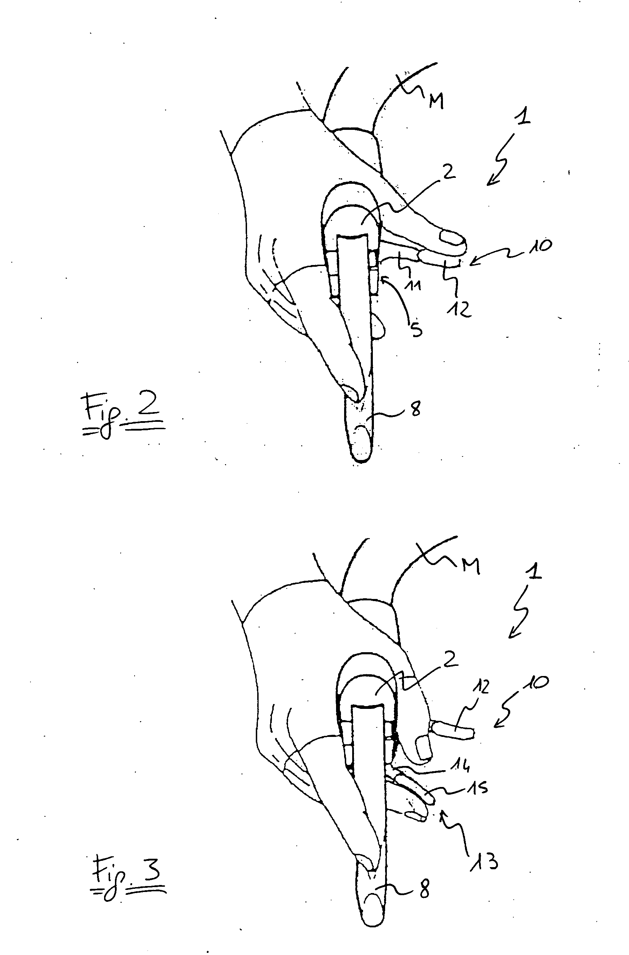

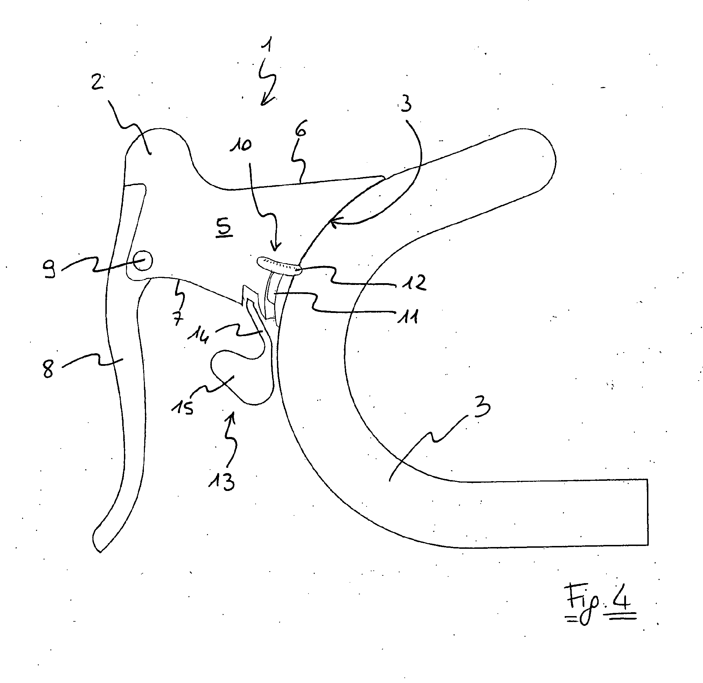

At the front end of the support body 2, a brake lever 8 is pivoted, about a pin 9 oriented according to an axis Y substantially perpendicular to the advancing direction X of the bicycle. At the top end of the brake lever 8 the head of a traction cable is connected, in a known way, for actuating the brake when the brake lever 8 is pulled by the cyclist towards the handlebars M. The actuation of the brake lever 8 typically occurs with the forefinger and/or the middle finger, of the hand of the cyclist, as illustrated in FIGS. 2 and 3.

From the inner side surface 5 of the support body 2 a first gearshift lever 10 protrudes, in a direction substantially perpendicular to the inner side surface 5 itself and to the brake lever 8, comprising an actuating arm 11 provided at its end with an enlarged actuating portion 12, suitable to receive in abutment the thumb of the cyclist (FIG. 2).

From the inner transverse surface 7 of the support body 2 a second gearshift lever 13 protrudes downwards, in a direction substantially parallel to the outer side surface 4 of the support body 2, comprising an actuating arm 14 provided at its end with an enlarged actuating portion 15 suitable to receive in abutment a finger of the right hand other than the thumb, preferably the middle finger or the ring finger (FIG. 3).

As can be observed in FIGS. 2 and 3, when the cyclist handgrips the control device 1 with the right hand he/she can easily and without distinction actuate the brake lever 8, the first gearshift lever 10 or the second gearshift lever 13 without moving the hand gripped on the support body 2. In particular, the actuating portion 12 of the first gearshift lever 10 is easily reachable from the inner side of the support body 2 with the thumb, while the actuating portion 15 of the second gearshift lever 13 is easily reachable from the outer side of the support body 2 with another finger.

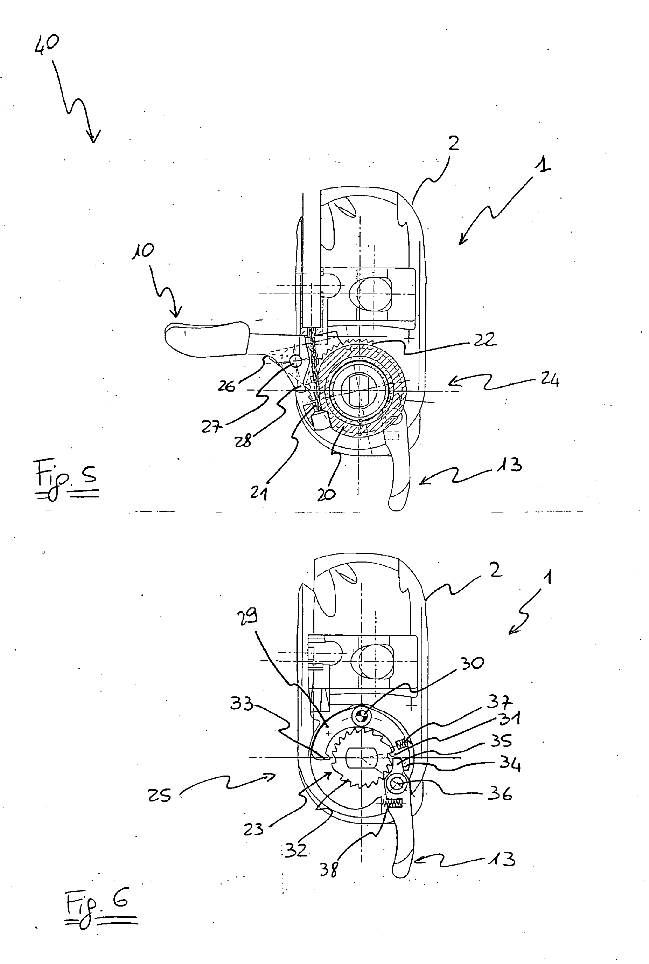

More in detail and as can be observed in FIG. 4, the first gearshift lever 10 is placed in (close) proximity to the rear side 3 of the support body 2 and the second gearshift lever 13 is placed in (close) proximity to the first gearshift lever 10. In assembled states, both the gearshift levers 10, 13 then are in proximity to the handlebars M. As an alternative, the position of the two gearshift levers 10, 13 could be inverted.

Such an arrangement of the first and second gearshift lever 10, 13 with respect to the support body 2 permits to leave a sufficiently large space on the support body 2 in such a way as not to hinder the hand of the cyclist when he/she grips the support body 2 wrapping it with his/her fingers, which can easily close around the support body in front of the two gearshift levers 10, 13.

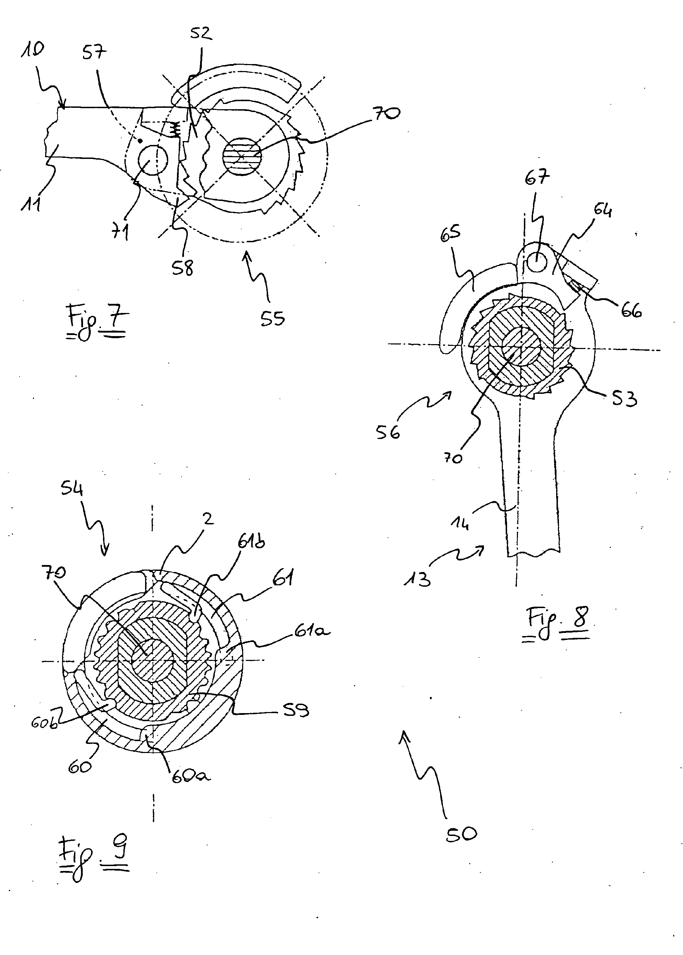

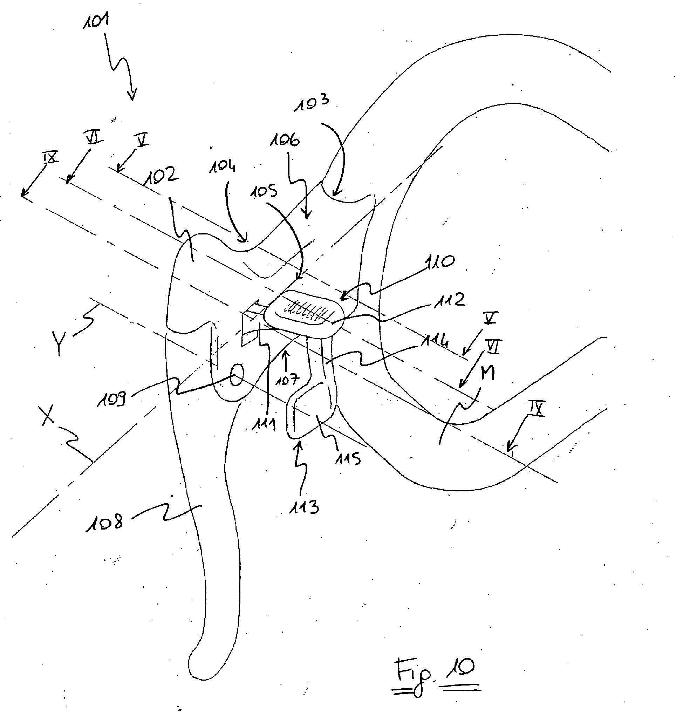

With reference to FIGS. 5 and 6, a first type of control mechanism 40 of the rear gearshift group is now described, usable in the control device 1 of FIGS. 1 to 4 and which is partially known in U.S. 6,792,826 to the same Applicant, to which reference should be made for further details.

The control mechanism 40 is of the release type, wherein the first gearshift lever 10 actively controls the winding of a traction cable 21 of the rear derailleur (upward gearshift), while the second gearshift lever 13 allows the release unwinding of the cable (downward gearshift) using the elastic return force of the traction of the same cable and of a return spring provided in the rear derailleur itself.

The release control mechanism 40 comprises:
- a cable-winding bush 20 pivotally supported in the support body 2, about which the control cable 21 winds and unwinds and provided with a first toothed sector 22 (FIG. 5) at a first transverse plane V-V transverse to the rotation axis of the bush and of a toothed crown 23 at a second transverse plane VI-VI transverse to the rotation axis of the bush;
- a first ratchet 24 (FIG. 5) associated with the first gearshift lever 10 and which cooperates with the first toothed sector 22; and
- a second ratchet 25 (FIG. 6) associated with the second gearshift lever 13 and which cooperates with the toothed crown 23.

In resting conditions, the control mechanism 40 is in the state illustrated in FIGS. 5 and 6.

With specific reference to FIG. 5, the first ratchet 24 is comprised of a plate 26 rotatably assembled on the cable-winding bush 20 and kept pressed in the shown resting position by a return spring (not shown). The first gearshift lever 10 is pivoted on the plate 26 at the relative pin 27, having an axis substantially perpendicular to the axis 9 of the brake lever 8, and has an engagement tooth 28 for the first toothed sector 22.

With specific reference to FIG. 6, the second ratchet 25 comprises a rocker arm 29 articulated to the support body 2 through a pin 30. The rocker arm 29 comprises, at one end, a first engaging element 31 which cooperates with the teeth 32 of the toothed crown 23 and, at the opposed end, a second engaging element 33 which also cooperates with the teeth 32 of the toothed crown 23. The rocker arm 29 is made in such a way that when the first engaging element 31 engages the teeth 32, the second engaging element 33 is disengaged from the teeth 32 and, on the contrary, when the second engaging element 33 engages the teeth 32 the first engaging element 31 is disengaged from the teeth 32.

In the embodiment of FIG. 6, the toothed crown 23 is shown as having two toothed sectors 23, but it could have as an alternative a single teething.

The rocker arm 29 has an appendage 34 which cooperates in an abutment relation with a corresponding appendage 35 of the second gearshift lever 13, so that an oscillation of the second gearshift lever 13 about the relative pin 36, having an axis substantially perpendicular to the axis 9 of the brake lever 8, in a clockwise direction in FIG. 6, produces an oscillation in the opposite direction (in counterclockwise direction in FIG. 6) of the rocker arm 29 about the pin 30. The rocker arm 29 and the second gearshift lever 13 cooperate with respective elastic elements 37, 38, comprised for example of small compression coil springs interposed between the support body 2 and respective seats formed in the rocker arm 29 and in the second gearshift lever 13. The spring 37 associated with the rocker arm 29 tends to keep the rocker arm 29 in a position wherein the first engaging element 31 engages the teeth 32, swinging it in clockwise direction in FIG. 6. The spring 38 associated with the second gearshift lever 13 tends to make the second gearshift lever 13 rotate in a direction corresponding to a relative separation of the appendages 35 and 34 (in counterclockwise direction in FIG. 6). The spring 38 pushes the second gearshift lever 13 towards an end stop defined by a portion of the support body 2.

The teeth 32 and the first engaging element 31 of the second ratchet 25 are shaped in such a way that when the first engaging element 31 is in an engaged state with the teeth 32 of the toothed crown 23, the cable-winding bush 20 is free of rotating, as controlled by the first gearshift lever 10 through the first ratchet 24, in the direction of further winding of the derailleur control cable winding on the cable-winding bush 20 (counterclockwise direction in FIG. 6), while the engaging element 31 prevents the rotation of the cable-winding bush 20 in the opposed direction releasing the cable 21 (clockwise direction in FIG. 6).

Also the second engaging element 33 is shaped in such a way that, when it is in an engaged state with the teeth 32 of the toothed crown 23, it prevents the rotation of the cable-winding bush 20 in the direction releasing the cable 21 (clockwise direction in FIG. 6).

In resting conditions, the control cable 21 of the derailleur applies to the cable-winding bush 20 a torque that tends to make it rotate in the cable unwinding direction (in clockwise direction in FIGS. 5, 6). The mechanism comprised of the first engaging element 31 and of the teeth of the toothed crown 23 of the second ratchet 25 prevents, as said, the rotation of the cable-winding bush 20 in such a direction.

After a first small rotation of the first gearshift lever 10 about the pin 27, in the counterclockwise direction of FIG. 5, the engagement tooth 28 engages between two teeth of the first sector 22 and the further rotation of the first gearshift lever 10, again in the counterclockwise direction of FIG. 5, causes the rotation (in the counterclockwise direction of FIG. 5) of the cable-winding bush 20 and winding of the control cable 21 for the desired quantity. The rotation is permitted, as said, by the resting position of the second ratchet 25. The first gearshift lever 10, once released, returns to its initial resting position through the action of the spring associated with the plate 26. The new angular position of the cable-winding bush 20 is maintained by the second ratchet 25, associated with the second gearshift lever 13.

A small rotation of the second gearshift lever 13 about the pin 36 against the action of the spring 38 (in the clockwise direction of FIG. 6) causes, through the abutment relation of the appendages 34 and 35, the rotation of the rocker arm 29 in the opposite direction, against the action of the spring 37 (counterclockwise direction of FIG. 6). As soon as the first engaging element 31 of the second ratchet 25 releases the teeth 32 of the toothed crown 23, the cable-winding bush 20 is free of rotating in the direction unwinding cable 21 (clockwise in FIG. 6), under the action of the torque determined by the cable 21 itself and by the return spring of the derailleur. The cable-winding bush 20 then rotates in this direction until one of the teeth 32 of the toothed crown 23 engages the second engaging element 33 of the second ratchet 25. The rotation quantity permitted in this step corresponds to about half of the rotation required to make a downward gearshift. When the cyclist releases the second gearshift lever 13, the latter and the rocker arm 29 return in the respective resting conditions under the action of the springs 37 and 38. So the second engaging element 33 disengages from the teeth 32, leaving the cable-winding bush 20 still free of rotating in the direction unwinding cable 21 (clockwise in FIG. 6) under the action of the torque determined by the cable 21 and by the derailleur return spring. The swinging of the rocker arm 29 and the rotation of the cable-winding bush 20 end when one of the teeth 32 of the toothed crown 23 engages the first engaging element 31, in the new angular position corresponding to the downward gearshift carried out.

Advantageously, in the control device 1 of the invention, with the first gearshift lever 10 associated with the thumb the upward gearshift is carried out, which requires more force to overcome the return force of the return spring of the rear derailleur, while the release operation that requires less actuating force is carried out with another finger of the hand, and with the second gearshift lever 13.

In an embodiment, however, it is possible to provide for inverting the functions carried out by the first and the second gearshift levers 10, 13 so that the second gearshift lever could be actuated to carry out the upward gearshift by pushing into rotation of the cable-winding bush, while the first gearshift lever could be actuated to carry out the release of the cable-winding bush.

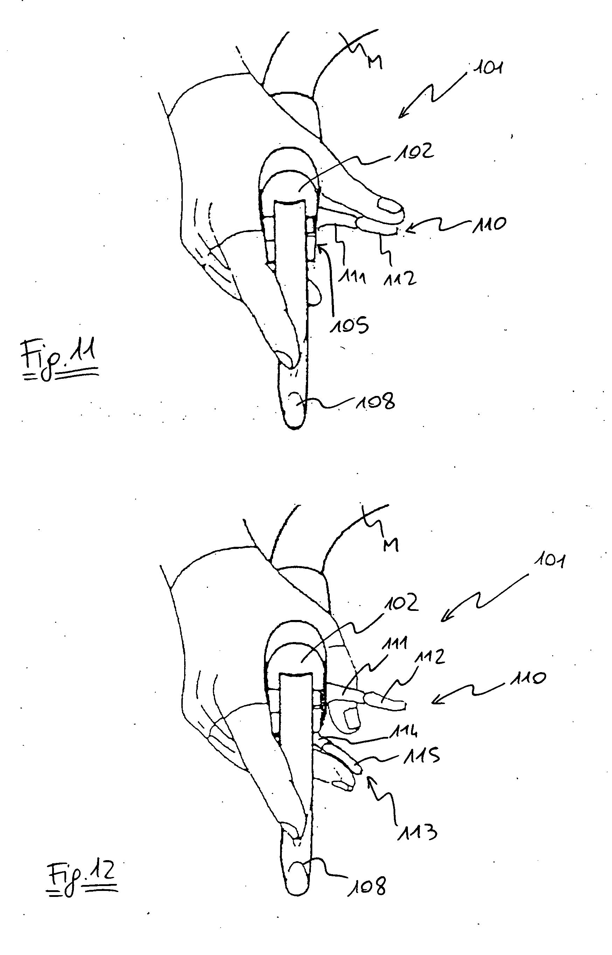

Referring to FIGS. 7, 8 and 9, a second type of control mechanism 50 of the rear gearshift group is now described, usable in the control device 1 of FIGS. 1 to 4 and known from U.S. 5,791,195 to the same Applicant, to which reference should be made for further details.

The control mechanism 50 is of the type with an active mechanic action in both directions, i.e. a mechanism wherein the winding and unwinding of the control cable are controlled for all the step of rotating the cable-winding bush by the force applied by the cyclist on the first and the second gearshift levers 10, 13. In a not operative condition, i.e. with the derailleur in a fixed position, the cable-winding bush is kept still through a proper indexing mechanism and the actuating levers are placed in a resting position mechanically free from the bush.

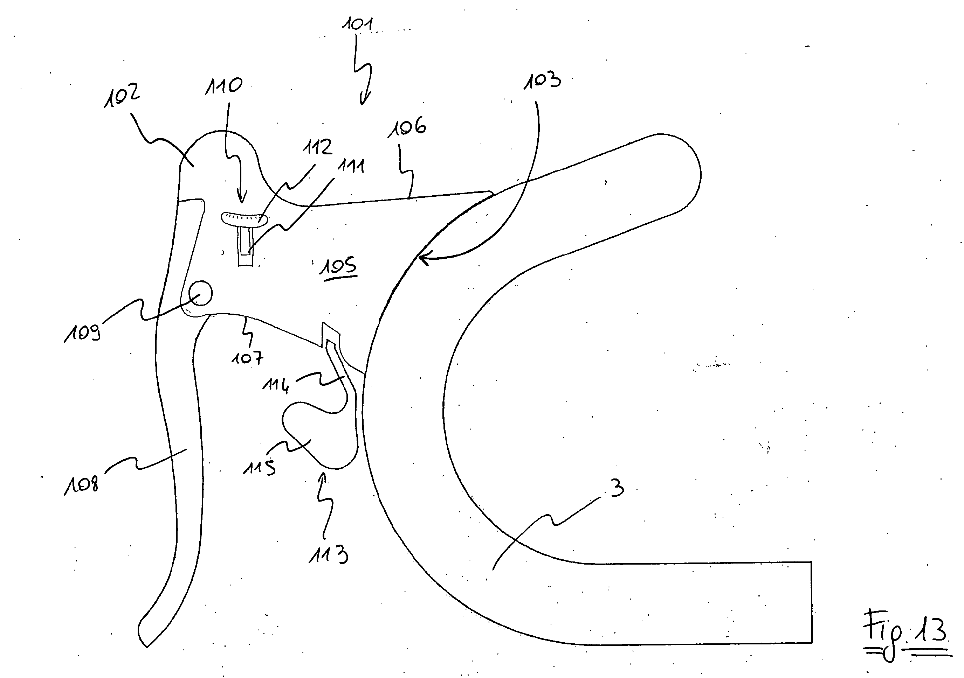

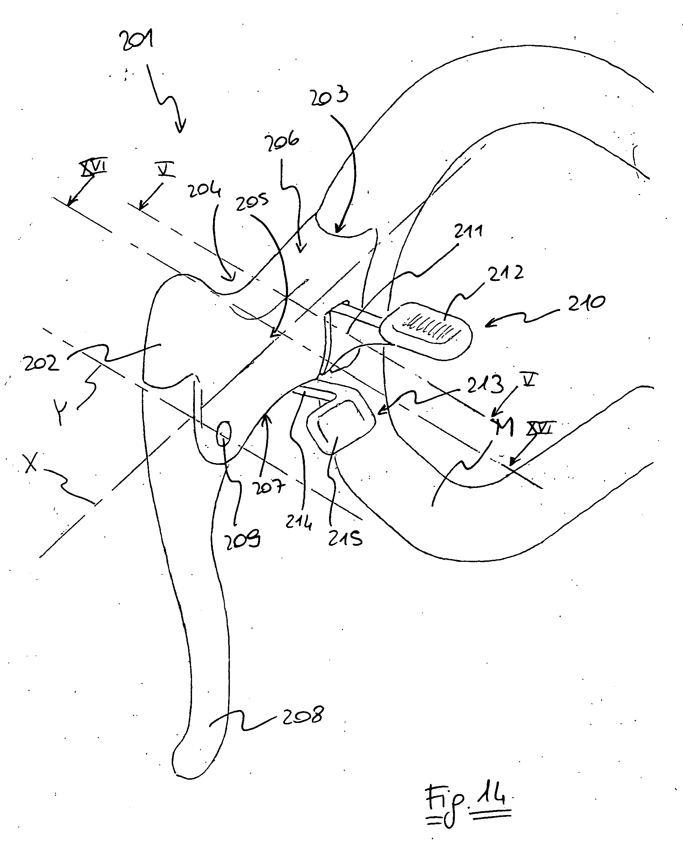

More in detail, the active control mechanism 50 comprises:
- a cable-winding bush (not shown in FIGS. 7-9), about which a control cable winds and unwinds, provided with a first toothed sector 52 (FIG. 7) and a second toothed sector 53 (FIG. 8) integral in rotation with it about a central shaft 70;
- an indexing mechanism 54 (FIG. 9) associated with the cable-winding bush;
- a first ratchet 55 (FIG. 7) associated with the first gearshift lever 10 and cooperating with the first toothed sector 52;
- a second ratchet 56 (FIG. 8) associated with the first gearshift lever 13 and cooperating with the second toothed sector 53.

The first ratchet 55 (FIG. 7) comprises a plate 57 rotatably assembled about the central shaft 70 and kept pressed in the resting position by a return spring (not shown). The first gearshift lever 10 is pivoted with the relative pin 71, having an axis substantially perpendicular to the axis 9 of the brake lever 8, on the first plate 57 and has at its end an engagement tooth 58 that, in resting conditions, is disengaged from the first toothed sector 52.

The second ratchet 56 (FIG. 8) associated with the second gearshift lever 13 provides an engaging element 64 that, in resting conditions, is disengaged from the second toothed sector 53 of the cable-winding bush because it abuts on a reference block 65.

The indexing mechanism 54 (FIG. 9) comprises a toothed wheel 59 integral in rotation with the cable-winding bush. The toothed wheel 59 cooperates with its teeth with two springs 60, 61 placed diametrically opposite one another and inserted in a circumferential cavity 62 of the support body 2, external to the toothed wheel 59. Each spring 60, 61 has an end 60a, 61a fixed to the support body 2 and the other free end 60b, 61b pushed and inserted between the gaps of the teeth of the toothed wheel 59. The springs 60, 61, engaged in the gaps, maintain the angular position of the toothed wheel 59 and therefore of the cable-winding bush fixed.

After a first small rotation (in counterclockwise direction in FIG. 7) of the first gearshift lever 10, the gear tooth 58 is engaged in a gap between two teeth of the first sector 52 and a further rotation in the same direction of the first gearshift lever 10 about the central shaft 70 causes the pushed rotation of the first toothed sector 52 and of the cable-winding bush and the winding of the control cable for the desired angle, permitted by the indexing mechanism 54 as described below. The first gearshift lever 10, once released, returns in its resting position through the return spring of the plate 57. The new angular position of the cable-winding bush is maintained by the indexing mechanism 54.

When the second gearshift lever 13 is rotated about the central shaft 70, having an axis substantially perpendicular to the axis 9 of the brake lever 8, in opposed direction to the first lever 10 direction (clockwise direction in FIG. 8), the engaging element 64 is pushed in engagement in the gaps of the second toothed sector 53 through a thrusting spring 66. The second toothed sector 53 and the cable-winding bush are pushed in rotation unwinding the control cable, as permitted by the indexing mechanism 54 in the way described below. The second gearshift lever 13, once released, returns to its resting position through the return spring, not shown, while the new angular position of the cable-winding bush is maintained by the indexing mechanism 54.

When an upward gearshift or a downward gearshift is carried out with the first or with the second gearshift levers 10, 13, the rotation caused by the cable-winding bush on the toothed wheel 59 of the indexing mechanism 54 pushes the ends of the springs 60b, 61b out of the gaps and the springs are compressed until the next expansion, when they will engage the next gap in the new angular position.

Advantageously, as with the release mechanism 40, with the first gearshift lever 10 associated with the thumb the upward gearshift is carried out, which requires more force in order to overcome the return force of the return spring of the derailleur, while the operation of downward gearshift is carried out with another finger of the hand and with the second gearshift lever 13, because it requires less actuating force. In fact also in this case, the downward gearshift operation is aided by the torque which tends to unwind the cable and by the return spring of the derailleur, even if it also has to overcome the resistance of the indexing mechanism 54.

However, in an embodiment it is possible to provide for inverting the functions carried out by the second and the second gearshift lever 10, 13.

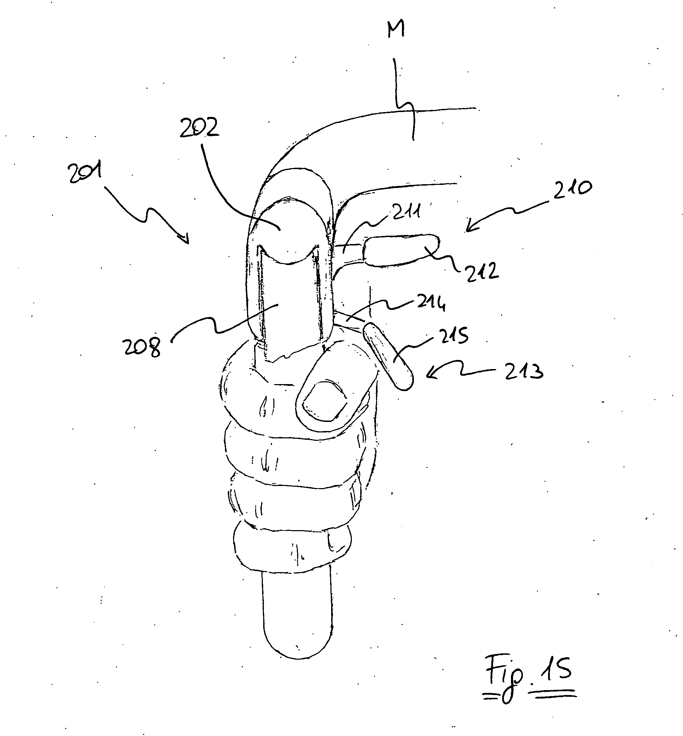

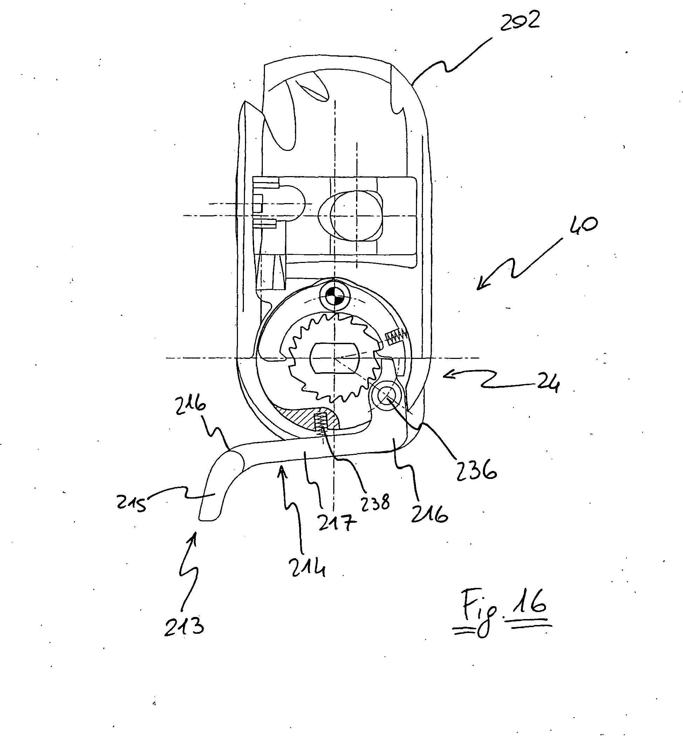

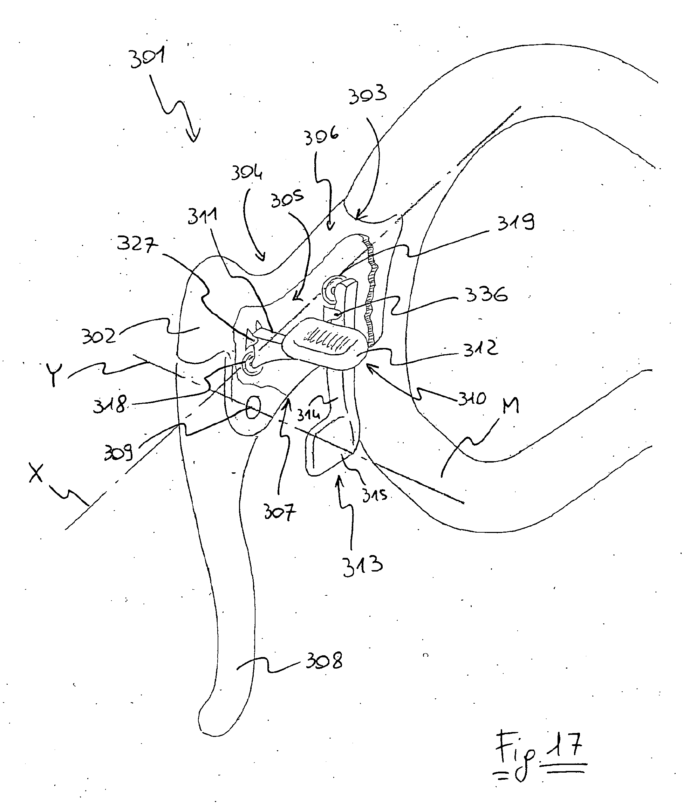

In FIGS. 10 to 13 a second embodiment of the integrated control device according to the invention is shown, again of the right type by way of an example. The components similar to those of the embodiment of FIGS. 1 to 4 bear similar reference numbers, increased by 100. Even if not described in the following, the integrated control device 101 is identical with the integrated control device 1 and in particular it can have either of the control mechanisms 40 and 50 associated.

The integrated control device 101 differs from the integrated control device 1 for the different arrangement of the first gearshift lever 110 along the inner side surface 105 of the support body 102.

More in particular, the second gearshift lever 113 is placed in (close) proximity to the rear side 103 of the support body 102 and, in assembled conditions and as it is better shown in FIG. 13, is in proximity to the handlebars M. The first gearshift lever 110 is instead placed in (close) proximity to the front end of the support body 102.

Such arrangement of the first and second gearshift levers 110, 113 relative to the support body 102 permits to leave a large enough space on the support body 102 so that it does not hinder the hand of the cyclist when he/she grips the support body 102 wrapping and holding it with the fingers, that he/she can easily close around the support body between the two gearshift levers 110, 113.

In FIGS. 14 to 16 a third embodiment of the integrated control device according to the invention is shown, again of the right type by way of an example. The components similar to those of the embodiment of FIGS. 1 to 4 bear similar reference numbers, increased by 200. Even if not described in the following, the integrated control device 201 is identical with the integrated control device 1 and in particular it can have either of the control mechanisms 40 and 50 associated.

The integrated control device 201 differs from the integrated control device 1 for the different arrangement of the second gearshift lever 213.

More in particular, the first gearshift lever 210 is still placed in (close) proximity to the rear side 203 of the support body 202, i.e. in (close) proximity to the handlebars M in an assembled condition, and the second gearshift lever 213 is again placed in (close) proximity to the first gearshift lever 210. In this case also, as an alternative, the position of the two gearshift levers 10, 13 could be inverted.

However, the second gearshift lever 213 is placed in such a way that its actuating portion 215 is extended below the support body 202, in an offset position towards its inner side face 205.

When the cyclist grips the control device 201 with the right hand, he/she can still easily and without distinction actuate the brake lever 208, the first gearshift lever 210 or the second gearshift lever 213 without moving the hand gripping on the support body 202. In particular, the actuating portion 212 of the first gearshift lever 210 is easily reachable from the inner side of the support body 202 with the thumb, while the actuating portion 215 of the second gearshift lever 213 is easily reachable from the outer side of the support body 202 with another finger.

Moreover, as it is shown in FIG. 15, when the cyclist grips directly the curved portion of the handlebars M, none of the two gearshift levers 210, 213 interferes with the position of the fingers. Also from this gripping, the actuating portion 212 of the first gearshift lever 210 is easily reachable from the inner side of the support body 202 with the thumb, while the actuating portion 215 of the second gearshift lever 213 is easily reachable from the outer side of the support body 202 with another finger.

As better shown in FIG. 16, the second gearshift lever 213 has a double bend 216, the intermediate portion 217 among the bends being extended adjacent below to the support body 202.

This simple provision permits to avoid modifying or to modify to a minimum extent a control mechanism provided for the first embodiment. As an example, FIG. 16 is a view corresponding to the view of FIG. 6 of the second ratchet 25 of the control releasing mechanism 40 and differs from that only for the different position of the return spring 238 of FIG. 16 relative to the return spring 38 of FIG. 6, which is placed at the intermediate portion 217 of the second gearshift lever 213.

It will be immediately understood that in the case of the use of the active control mechanism of FIGS. 7-9, it is not necessary any change of the mechanism itself.

It will also be understood that making just a few changes to the control mechanism, it will be possible to use a second gearshift lever 213 without the double bend 216, or with a single bend, and protruding below the support body, substantially from its inner side face 205.

In FIG. 17 a fourth embodiment of the integrated control device according to the invention is shown, again of the right type by way of an example. The components similar to those of the embodiment of FIGS. 1 to 4 bear similar reference numbers, increased by 300.

The first gearshift lever 310 is pivoted to the support body 302 about a pin 327 having an axis perpendicular to the axis 309 of the brake lever 308, and acts on a first switch 318, placed in the interior of the support body 302 itself, when it is driven into rotation, typically with the thumb of the cyclist.

The second gearshift lever 313 is also pivoted to the support body 302 about a pin 336 having an axis perpendicular to the axis 309 of the brake lever 308, and acts on a second switch 319, placed in the interior of the support body 302 itself, when it is driven into rotation, typically with another finger of the hand of the cyclist as the middle or the ring finger.

The first and the second switches 318, 319 are, respectively, the upward gearshift and downward gearshift control switches of an electric or electronic gearshift system for a bicycle.

In FIG. 17, the arrangement of the first gearshift lever 310 and of the second gearshift lever 313 substantially corresponds to that of the levers of the second embodiment shown in FIG. 10. More in particular, the first gearshift lever 310 is pivoted in (close) proximity to the brake lever 308 and the second gearshift lever 313 is pivoted in (close) proximity to the rear side 303 of the support body 302. The second lever 313 is pivoted directly on the inner side surface 305 of the support body 302, but is still made protruding below the support body 302.

It will be however understood that in case of an electric or electronic gearshift also the configurations of the other described embodiments can be used.

## Claims

1. Integrated control device (1, 101, 201, 301) for driving a derailleur and a brake of a bicycle with curved handlebars (M), comprising a support body (2, 102, 202, 302) having a rear side (3, 103, 203, 303) for fixing in front of a curved handgrip portion of the handlebars (M), a front side bearing a brake lever (8, 108, 208, 308) pivoted about a first axis (9, 109, 209, 309), an inner side surface (5, 105, 205, 305), an outer side surface (4, 104, 204, 304) and a top transverse surface (6, 106, 206, 306), and a first (10, 110, 210, 310) and a second gearshift levers (13, 113, 213, 313) pivoted about a second (27, 327) and a third axis (36, 236, 336), said first (10, 110, 210, 310) and second gearshift levers (13, 113, 213, 313) having a respective actuating portion (12, 112, 212, 312, 15, 115, 215, 315), wherein the actuating portions (12, 112, 212, 312, 15, 115, 215, 315) can be reached by the cyclist's fingers from opposed sides of the support (2, 102, 202, 302), **characterized in that** said actuating portions (12, 112, 212, 312, 15, 115, 215, 315) are both placed in positions out of the reach of the brake lever (8, 108, 208, 308).

2. Integrated control device (1, 101, 201, 301) according to claim 1, **characterized in that** said second (27, 327) and third axis (36, 236, 336) are substantially parallel to each other and substantially perpendicular to said first axis (9, 109, 209, 309).

3. Integrated control device (1, 101, 201, 301) according to claim 1, **characterized in that** the first gearshift lever (10, 110, 210, 310) protrudes from the inner side surface (5, 105, 205, 305) of the support body (2, 102, 202, 302), substantially perpendicularly to the brake lever (8, 108, 208, 308), the respective actuating portion (12, 112, 212, 312) being substantially horizontal.

4. Integrated control device (1, 101, 201, 301) according to claim 3, **characterized in that** the first gearshift lever (10, 110, 210, 310) controls an upward gearshift.

5. Integrated control device (1, 101, 201, 301) according to anyone of the preceding claims, **characterized in that** the second gearshift lever (13, 113, 213, 313) protrudes substantially vertically below the support body (2, 102, 202, 302).

6. Integrated control device (1, 101, 201, 301) according to claim 5, **characterized in that** the second gearshift lever (13, 113, 213, 313) controls a downward gearshift.

7. Integrated control device (1, 201) according to anyone of the preceding claims, **characterized in that** at least one of the first gearshift lever (10, 210) and the second gearshift lever (13, 213) is pivoted in proximity to the rear side (3, 203) of the support body (2, 202).

8. Integrated control device (1, 201) according to anyone of the preceding claims, **characterized in that** both the first gearshift lever (10, 210) and the second gearshift lever (13, 213) are pivoted in proximity to the rear side (3, 203) of the support body (2, 202)

9. Integrated control device (101, 301) according to anyone of the preceding claims, **characterized in that** one of the first gearshift lever (110, 310) and the second gearshift lever (113, 313) is pivoted in proximity to the rear side (103, 303) of the support body (102, 302) and the other of the first gearshift lever (110, 310) and the second gearshift lever (113, 313) is pivoted in close proximity to the brake lever (108, 308).

10. Integrated control device (1, 101) according to anyone of the preceding claims, **characterized in that** the second gearshift lever (13, 113) protrudes substantially vertically below the support body (2, 102), in an offset position towards its outer side face.

11. Integrated control device (201, 301) according to any of the claims 1 to 9, **characterized in that** the second gearshift lever (213, 313) protrudes below the support body (202, 302), in an offset position towards its inner side face.

12. Integrated control device (201) according to claim 11, **characterized in that** the second gearshift lever (213) has a double bend (216), the intermediate portion (217) between the bends (216) being extended adjacent below the support body (202).

13. Integrated control device (1, 101, 201) according to anyone of the preceding claims, **characterized in that** the first gearshift lever (10, 110, 210) and the second gearshift lever (13, 113, 213) control the rotation in respective opposed directions of a cable-winding bush (20) for a traction cable (21) of a gearshift group, the cable-winding bush (20) being housed in a cavity of the support body (2, 102, 202).

14. Integrated control device (1, 101, 201) according to claim 13, **characterized in that** one of the gearshift levers (10, 110, 210) actively controls the rotation of the cable-winding bush (20) in a direction winding the traction cable (21), while the other of the gearshift levers (13, 113, 213) leaves the cable-winding bush (20) free of rotating in the direction unwinding the traction cable (21), under the traction of the traction cable (21) itself.

15. Integrated control device (1, 101, 201, 301) according to claim 13, **characterized in that** each of the gearshift levers (10, 110, 210, 13, 113, 213) actively controls the rotation of the cable-winding bush (20) in a respective direction.

16. Integrated control device (301) according to anyone of the preceding claims, **characterized in that** each of the gearshift levers(10, 110, 210, 310, 13, 113, 213, 313) controls the pushing of a respective electric switch (318, 319) driving an electric or electronic gearshift mechanism.
